# EUROPÄISCHE PATENTANMELDUNG

(11) **EP 1 391 622 A2**
(43) Veröffentlichungstag der Anmeldung: **25.02.2004**
(21) Anmeldenummer: 03018292.7
(22) Anmeldetag: 12.08.2003
(51) Int. Cl.: F16D 13/38

(54) **Reibungskupplung**

(30) Priorität: 22.08.2002 DE 10238366
(71) Anmelder: Sachs Race Engineering GmbH, 97424 Schweinfurt (DE)
(72) Erfinder: Friedrich, Horst, 97491 Aidhausen (DE); Oberle, Klaus-Peter, 97493 Bergrheinfeld (DE); Selzam, Werner, 97537 Wipfeld (DE); Istschenko, Michael, 97424 Schweinfurt (DE)

(57) **Zusammenfassung**

Eine Reibungskupplung umfasst eine Gehäuseanordnung (12) und eine Zwischenplattenanordnung (28), welche mit der Gehäuseanordnung (12) zur gemeinsamen Drehung um eine Drehachse (D) gekoppelt ist, um eine Anpresskraft zu übertragen, vorzugsweise zwischen zwei Abtriebsreiborganen (30, 32) angeordnet ist, wobei die Zwischenplattenanordnung (28) wenigstens zwei gegen die Wirkung einer elastischen Vorspannanordnung (52) bezüglich einander verlagerbare Zwischenplattenelemente (38, 48) umfasst.

## Beschreibung

Die vorliegende Erfindung betrifft eine Reibungskupplung, umfassend eine Gehäuseanordnung sowie eine Zwischenplattenanordnung, welche mit einer Gehäuseanordnung zur gemeinsamen Drehung um eine Drehachse gekoppelt ist.

Reibungskupplungen, die im Rennsportbereich bzw. in Verbindung mit leistungsstarken Antriebsaggregaten eingesetzt werden, sind im Allgemeinen so aufgebaut, dass sie mehrere Paarungen an miteinander in Reibwechselwirkung tretenden Oberflächen aufweisen. Diese sind einerseits an gehäuseseitig drehfest gehaltenen Reibkomponenten ausgebildet, und sind andererseits an mit der oder den Getriebeeingangswellen drehfest zu koppelnden Bauteilen, beispielsweise Kupplungsscheiben oder dergleichen, vorgesehen. Beim Einrücken derartiger Reibungskupplungen werden durch Beaufschlagung einer Anpressplatte vermittels eines Kraftspeichers oder dergleichen die einander gegenüberliegenden Oberflächen in gegenseitige Reibanlage gebracht, so dass mit zunehmender Anpresskraft das Kupplungsmoment ebenfalls zunimmt.

Um am Beginn eines Einkuppelvorgangs eine bessere Dosierbarkeit des Kupplungsmoments und somit des auf Antriebsräder übertragenen Drehmoments erlangen zu können, ist es bei herkömmlichen Kupplungen bekannt, im Bereich der Kupplungsscheiben so genannte Belagsfederungen vorzusehen, die am Beginn des Einkuppelvorgangs der durch einen Kraftspeicher bereitgestellten Einrückkraft entgegenwirken und so einen allmählichen Anstieg des Kupplungsmoments bis zu einer maximalen Kompression derselben unterstützen. Aufgrund der sehr hohen Belastung der bei Rennsportkupplungen oder in Verbindung mit leistungsstarken Antriebsaggregaten eingesetzten Kupplungen ist es im Allgemeinen jedoch nicht oder nur sehr schwierig möglich, Belagsfederungen vorzusehen, die den auftretenden Belastungen standhalten können.

Es ist die Aufgabe der vorliegenden Erfindung, eine Reibungskupplung vorzusehen, welche durch Einführen einer Elastizität eine verbesserte Dosierbarkeit des Kupplungsmoments am Beginn eines Einrückvorgangs ermöglicht.

Gemäß der vorliegenden Erfindung wird diese Aufgabe gelöst durch eine Reibungskupplung, umfassend eine Gehäuseanordnung und eine Zwischenplattenanordnung, welche mit der Gehäuseanordnung zur gemeinsamen Drehung um eine Drehachse gekoppelt ist, um eine Anpresskraft zu übertragen, vorzugsweise zwischen zwei Abtriebsreiborganen angeordnet ist, wobei die Zwischenplattenanordnung wenigstens zwei gegen die Wirkung einer elastischen Vorspannanordnung bezüglich einander verlagerbare Zwischenplattenelemente umfasst.

Bei der erfindungsgemäßen Reibungskupplung wird also die Elastizität in eine gehäuseseitig angebundene Baugruppe integriert, so dass diese Elastizität unabhängig vom Aufbau eines Schwungrads, einer Anpressplatte oder vom Aufbau der mit der Antriebswelle oder den Antriebswellen zu koppelnden Reiborganen bereitgestellt werden kann.

Eine sehr bauraumsparende Ausgestaltungsform kann dadurch erlangt werden, dass wenigstens ein Zwischenplattenelement an einer einem anderen Zwischenplattenelement zugewandt positionierten Seite eine Aussparung zur teilweisen Aufnahme der Vorspannanordnung umfasst. Diese Aussparung kann beispielsweise als ringartige Vertiefung ausgebildet sein, die sich also im Wesentlichen über den Gesamtumfang des jeweiligen Zwischenplattenelements erstreckt. Um den Zusammenhalt der Zwischenplattenanordnung sicherzustellen, wird vorgeschlagen, dass die Zwischenplattenelemente durch Zusammenhalteorgane in einem Zustand maximalen gegenseitigen Abstands gegen die Vorspannwirkung der Vorspannanordnung gehalten sind. Dabei kann vorgesehen sein, dass die Zusammenhalteorgane durch Nietbolzen, Schraubbolzen oder dergleichen gebildet sind.

Die Vorspannanordnung kann wenigstens ein Federelement umfassen, beispielsweise wenigstens eine Tellerfeder, wenigstens eine Wellfeder, wenigstens ein Elastomerelement oder dergleichen.

Um den in einer Reibungskupplung vorhandenen Bauraum so effizient als möglich nutzen zu können, wird vorgeschlagen, dass wenigstens ein Zwischenplattenelement eine Reibfläche aufweist oder ein eine Reibfläche bereitstellendes Reibbelagselement trägt.

Gemäß einem weiteren Aspekt betrifft die vorliegende Erfindung eine Zwischenplattenanordnung für eine Reibungskupplung, wobei die Zwischenplattenanordnung wenigstens zwei gegen die Wirkung einer elastischen Vorspannanordnung bezüglich einander verlagerbare Zwischenplattenelemente umfasst.

Nachfolgend wird die Erfindung mit Bezug auf die beiliegenden Zeichnungen detailliert beschrieben. Es zeigt:
- Fig. 1: eine Längsschnittansicht einer Reibungskupplung;
- Fig. 2: eine vergrößerte Detailansicht der bei der Reibungskupplung der Fig. 1 eingesetzten Zwischenplatte;
- Fig. 3: eine Axialansicht der in Fig. 2 dargestellten Zwischenplatte.

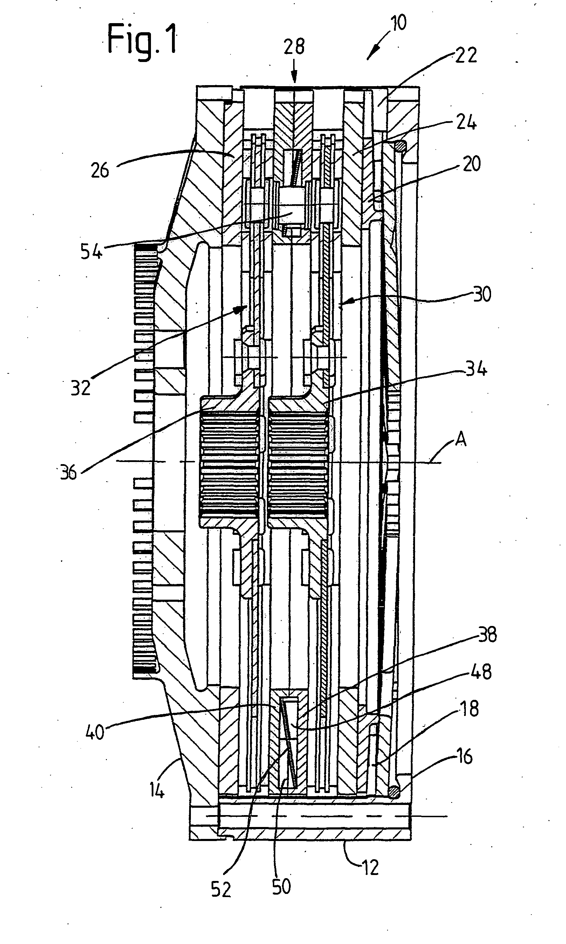

Die in Fig. 1 dargestellte Kupplungsanordnung 10 umfasst eine Gehäuseanordnung 12, welche an einer axialen Seite durch Schraubbolzen oder dergleichen mit einem Schwungrad 14 fest verbunden ist. An der anderen axialen Seite bildet die Gehäuseanordnung 12 einen Abstützbereich 16 für einen beispielsweise als Membranfeder ausgebildeten Kraftspeicher 18. Dieser beaufschlagt in einem radial weiter innen gelegenen Bereich eine Anpressplatte 20. Die Anpressplatte 20 ist mit der Gehäuseanordnung 12 drehfest gekoppelt, bezüglich dieser jedoch in Richtung der Drehachse A verlagerbar. Die drehfeste Ankopplung kann durch in Achsrichtung sich erstreckende Kopplungsabschnitte 22 der Gehäuseanordnung 12 erfolgen, welche in jeweilige Kopplungsaussparungen der Anpressplatte 20 eingreifen. Axial folgend auf die Anpressplatte 20 und auch das Schwungrad 14 sind Reibplatten 24, 26 vorgesehen, so dass die Anpressplatte 20 und das Schwungrad 14 selbst nicht zur Drehmomentübertragung reibend wirksam werden, sondern lediglich der Anpresskraftbeaufschlagung bzw. -abstützung dienen.

Zwischen den beiden Reibplatten 24, 26, die beispielsweise vollständig aus Metall aufgebaut sein können, liegt eine nachfolgend noch detaillierter beschriebene Zwischenplattenanordnung 28, die ebenfalls mit der Gehäuseanordnung 12 drehfest gekoppelt ist. Zwischen der Zwischenplattenanordnung 28 und der Reibplatte 24 liegen die Reibbeläge einer Kupplungsscheibe 30. Zwischen der Reibplatte 26 und der Zwischenplattennaordnung 28 liegen die Reibbeläge einer Kupplungsscheibe 32. Die beiden Kupplungsscheiben 30, 32 können in einem radial innen liegenden Nabenbereich 34, 36 drehfest an eine nicht dargestellten Abtriebswelle, beispielsweise Getriebeeingangswelle, angebunden werden, so dass grundsätzlich die in Fig. 1 dargestellte Reibungskupplung 10 als Zwei-Scheiben-Kupplung betrachtet werden kann. Es sei darauf hingewiesen, dass die beiden Kupplungsscheiben 30, 32 selbstverständlich durch eine Innenlamellenanordnung mit einer diese tragenden Nabe ersetzt werden können.

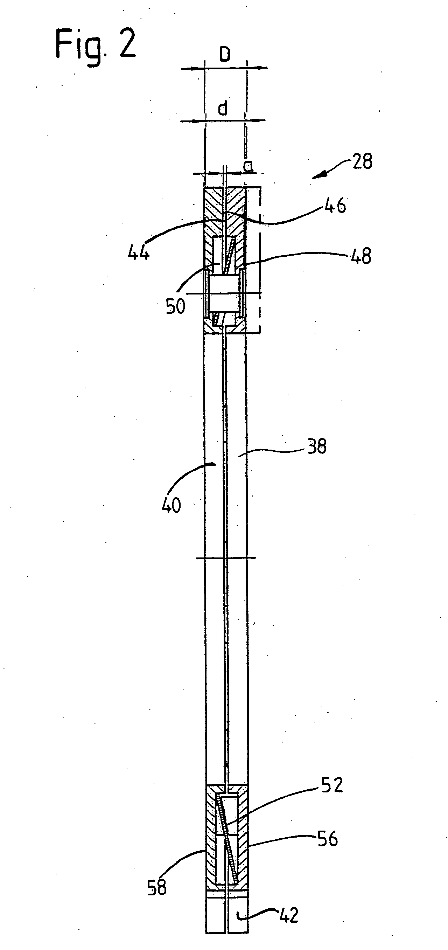

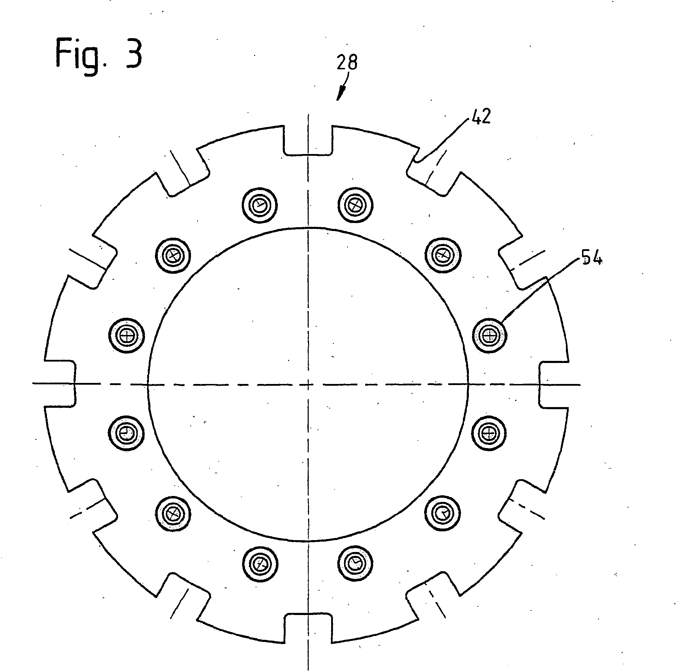

Die Fig. 2 und 3 zeigen die Zwischenplattenanordnung 28 detaillierter. Diese umfasst zwei zueinander im Wesentlichen baugleiche, ringförmige Plattenteile 38, 40, die in ihrem radial äußeren Bereich die Aussparungen 42 zur drehfesten Ankopplung an die Gehäuseanordnung 12 aufweisen. An ihren einander zugewandten Seiten 44, 46 weisen die beiden Zwischenplattenelemente 38, 40 beispielsweise ringartig umlaufende Vertiefungen 48, 50 auf. In diesen beiden Vertiefungen 48, 50 ist im dargestellten Beispiel als Vorspannanordnung eine Tellerfeder 52 angeordnet, die in einem radial inneren Bereich an dem Zwischenplattenlement 40 abgestützt ist und in einem radial äußeren Bereich an dem Zwischenplattenelement 38 abgestützt ist. Durch mehrere über den Umfang verteilt vorgesehene Kopplungsorgane 54, beispielsweise Nietbolzen, Schraubbolzen oder dergleichen, sind die beiden Zwischenplattenelemente 38, 40 so aneinander gehalten, dass in der in Fig. 2 dargestellten Positionierung mit maximalem gegenseitigem Abstand a die beiden an den Zwischenplattenelementen 38, 40 bereitgestellten Reibflächen 56, 58 einen maximalen Abstand D aufweisen. Durch die Vorspannwirkung der Tellerfeder 52 sind die beiden Zwischenplattenelemente 38, 40 unter Vorspannung dieser in Positionierung gehalten. Durch Axialbeaufschlagung bei Durchführung eines Einrückvorgangs wird die Zwischenplattenanordnung 28 zwischen den beiden Kupplungsscheiben 30, 32 bzw. deren Reibbelägen eingespannt, so dass nunmehr entgegen der Vorspannwirkung der Tellerfeder 52 die beiden Zwischenplattenelemente 38, 40 einander angenähert werden, und zwar so lange, bis sie den Zustand minimalen gegenseitigen Abstands d einnehmen. Im Übergang von dem Zustand mit dem Abstand D zu dem Zustand mit dem Abstand d, also einem Zustand, in welchem die beiden Zwischenplattenelemente 38, 40 aneinander anliegen, ist also im Bereich der Zwischenplattenanordnung 28 eine Axialelastizität vorhanden, welche eine Gegenkraft zu der vom Kraftspeicher 18 bereitgestellten Einrückkraft aufbaut. Durch den Aufbau dieser ansteigenden Gegenkraft wird es möglich, in dieser Übergangsphase das Kupplungsmoment sehr definiert einzustellen bzw. zu verändern, so dass das auf die Antriebsräder gelangende Antriebsdrehmoment entsprechend genau eingestellt bzw. verändert werden kann. Dies ist vor allem in der Startphase im Rennsport von großer Bedeutung, in welcher durch Schließen der Kupplung die Antriebsräder in einen Zustand gebracht werden sollen, in dem sie mit definiertem Schlupf im Bereich von 10 bis 15 % bezüglich eines Untergrunds drehen.

Durch die erfindungsgemäße Ausgestaltung der Zwischenplattenanordnung kann auch in eine im Rennsport einsetzbare Reibungskupplung eine derartige eine genaue Dosierung des Kupplungsmoments zulassende Elastizität integriert werden, die aufgrund der Positionierung der Vorspannanordnung, also im dargestellten Beispiel der Tellerfeder 52, auch unter der Übertragung sehr großer Drehmomente nicht leidet, wie dies im Falle von Belagsfederungen im Allgemeinen der Fall ist. Es ist. selbstverständlich möglich, dass in Anwendungsgebieten, in welchen entsprechend hohe Drehmomente nicht notwendigerweise zu übertragen sind, die erfindungsgemäße Zwischenplattenanordnung kombiniert werden kann mit Kupplungsscheiben, die zusätzlich auch noch eine Belagsfederung aufweisen und somit einen weiteren Beitrag zur Elastizität liefern.

Bei der erfindungsgemäßen Zwischenplattenanordnung können als Vorspannanordnung verschiedenste Elemente wie z. B. die angesprochene Tellerfeder 52, eine Wellfeder, über den Umfang verteilte diskrete Federelemente, wie z. B. Schraubendruckfedern, welche dann ggf. die Kopplungsbolzen 54 umgebend angeordnet sein können, oder auch mehrere gestapelte Federelemente vorgesehen sein. Auch ist es selbstverständlich möglich, massive Elastomerblöcke einzusetzen. Wie bereits angesprochen, können die Zwischenplattenelemente 38, 40 an ihren voneinander abgewandt liegenden Seiten Reibflächen 56, 58 bereitstellen. Selbstverständlich ist es auch möglich, an diesen Zwischenplattenelementen Reibbeläge vorzusehen, in deren Bereichen dann die Reibflächen gebildet sind, oder beidseits der Zwischenplattenanordnung Reibscheiben einzusetzen, wie sie beispielsweise in der Fig. 1 als Reibscheiben 24, 26 vorhanden sind. Die Zwischenplattenelemente 38, 40 können als Blechteile ausgebildet sein, in welche die Vertiefungen 48, 50 eingeformt oder spanabhebend eingearbeitet sind. Selbstverständlich können diese Plattenelemente auch als Gussbauteile bereitgestellt werden. Weiter ist es selbstverständlich möglich, die erfindungsgemäße Zwischenplatte in einem anderen axialen Bereich einer Kupplung einzusetzen, also einem Bereich, in welchem sich nicht zwischen zwei mit der Abtriebsseite gekoppelten Reiborganen positioniert ist, sondern beispielsweise als Ersatz für zumindest eine der Reibplatten 24, 26, die mit der Anpressplatte bzw. dem Schwungrad in Kontakt stehen.

Durch den erfindungsgemäßen Aufbau bzw. Einsatz einer Zwischenplattenanordnung kann die Elastizität im Bereich der Kupplung erhalten werden, ohne spezielle Maßnahmen am Schwungrad oder der Anpressplatte bereitstellen zu müssen. Ein weiterer Vorteil des erfindungsgemäßen Aufbaus ist, dass durch einfaches Austauschen einer derartigen Zwischenplattenanordnung 28 der im Betrieb auftretende Verschleiß von Reibbelägen bei einer derartigen Reibungskupplung dadurch kompensiert werden kann, dass eine Zwischenplattenanordnung mit größerer Dicke eingebaut wird, wie dies in Fig. 2 mit Strichlinie angedeutet ist. Eine Veränderung der Elastizität kann durch Austausch der Vorspannanordnung, also beispielsweise einer Feder, erfolgen, kann aber auch durch Austausch der gesamten Baugruppe erfolgen.

## Patentansprüche

1. Reibungskupplung, umfassend eine Gehäuseanordnung (12) und eine Zwischenplattenanordnung (28), welche mit der Gehäuseanordnung (12) zur gemeinsamen Drehung um eine Drehachse (D) gekoppelt ist, um eine Anpresskraft zu übertragen, vorzugsweise zwischen zwei Abtriebsreiborganen (30, 32) angeordnet ist, wobei die Zwischenplattenanordnung (28) wenigstens zwei gegen die Wirkung einer elastischen Vorspannanordnung (52) bezüglich einander verlagerbare Zwischenplattenelemente (38, 48) umfasst.

2. Reibungskupplung nach Anspruch 1,
**dadurch gekennzeichnet, dass** wenigstens ein Zwischenplattenelement (38, 40) an einer einem anderen Zwischenplattenelement (40, 38) zugewandt positionierten Seite (44, 48) eine Aussparung (48, 50) zur teilweisen Aufnahme der Vorspannanordnung (52) umfasst.

3. Reibungskupplung nach Anspruch 2,
**dadurch gekennzeichnet, dass** die Aussparung (48, 50) als ringartige Vertiefung ausgebildet ist.

4. Reibungskupplung nach einem der Ansprüche 1 bis 3,
**dadurch gekennzeichnet, dass** die Zwischenplattenelemente (38, 40) durch Zusammenhalteorgane (54) in einem Zustand maximalen gegenseitigen Abstands gegen die Vorspannwirkung der Vorspannanordnung (52) gehalten sind.

5. Reibungskupplung nach Anspruch 4,
**dadurch gekennzeichnet, dass** die Zusammenhalteorgane (54) durch Nietbolzen, Schraubbolzen oder dergleichen gebildet sind.

6. Reibungskupplung nach einem der Ansprüche 1 bis 5,
**dadurch gekennzeichnet, dass** die Vorspannanordnung (52) wenigstens ein Federelement (52) umfasst.

7. Reibungskupplung nach Anspruch 6,
**dadurch gekennzeichnet, dass** das wenigstens eine Federelement (52) wenigstens eine Tellerfeder (52), wenigstens eine Wellfeder, wenigstens ein Elastomerelement oder dergleichen umfasst.

8. Reibungskupplung nach einem der Ansprüche 1 bis 7,
**dadurch gekennzeichnet, dass** wenigstens ein Zwischenplattenelement (38, 40) eine Reibfläche (56, 58) aufweist oder ein eine Reibfläche bereitstellendes Reibbelagselement trägt.

9. Zwischenplattenanordnung für eine Reibungskupplung, wobei die Zwischenplattenanordnung (18) wenigstens zwei gegen die Wirkung einer elastischen Vorspannanordnung (52) bezüglich einander verlagerbare Zwischenplattenelemente (38, 40) umfasst.
